# EUROPEAN PATENT SPECIFICATION

(11) **EP 3 034 380 B1**
(45) Date of publication and mention of the grant of the patent: **13.11.2019**
(21) Application number: 15200602.9
(22) Date of filing: 16.12.2015
(51) Int. Cl.: B62D 1/19

(54) **VEHICLE CAB OF AN INDUSTRIAL OR COMMERCIAL VEHICLE COMPRISING A SYSTEM FOR SUPPORTING A STEERING COLUMN**
FAHRZEUGKABINE EINES INDUSTRIE- ODER NUTZFAHRZEUGS MIT SYSTEM ZUR UNTERSTÜTZUNG EINER LENKSÄULE
CABINE DE VÉHICULE D'UN VÉHICULE INDUSTRIEL OU COMMERCIAL COMPRENANT UN SYSTÈME POUR SUPPORTER UNE COLONNE DE DIRECTION

(30) Priority: 16.12.2014 IT TO20141052
(43) Date of publication of application: 22.06.2016
(73) Proprietor: IVECO S.p.A., 10156 Torino (IT)
(72) Inventor: CALAON, Ivan, 10125 TORINO (IT); BIANCHI, Pietro, 10129 TORINO (IT)
(74) Representative: Franzolin, Luigi

(56) References cited:
- EP-A1- 1 806 268
- DE-A1-102004 048 177
- FR-A1- 2 450 733
- GB-A- 2 015 446

## Description

### Scope of application of the invention

The present invention refers to the field of passive safety of industrial or commercial vehicles and refers in particular to a vehicle cab comprising a system for supporting a steering column. Such a steering support is well known from GB 2 015 446 A, which is considered the closest prior art document.

### Description of the state of the art

Cabs of industrial and commercial vehicles are geometrically configured in such a way that the driver is very close to the perimeter of said cab. This means that, in the case of a frontal collision, the driver is at risk of serious injury in the impact of the sternum against the steering wheel.

On the other hand, since industrial or commercial vehicles are usually particularly high, impacts with lower or higher vehicles produce completely opposite effects in terms of the deformation of the cab. It is therefore hard to guarantee a good level of passive safety for the driver of the vehicle.

### Summary of the invention

Therefore the purpose of the present invention is to provide a system for supporting a steering column incorporated in a cab of an industrial or commercial vehicle, which provides better passive protection for the driver.

The idea at the basis of the present invention is to control the sequence of deformation of certain components defining a frontal wall of the cab. More in detail a lower part of the frontal wall of the cab is constructed so as to be deformed first in order to transfer a rearward displacement to a support of the steering column. The upper part of the support of the steering column instead hangs from an upper part of the frontal wall of the cab, which protrudes less than said lower part and preferably has a greater resistance to deformation. Thus, in the event of a frontal impact, the deformation of the lower part of the frontal wall affects the lower part of the steering column, which tends to rotate about the upper part of the cab moving the steering wheel away from the driver's chest, and so increasing the survival space.

An object of the present invention is a vehicle cab of an industrial or commercial vehicle comprising a system for supporting a steering column as set forth in claim 1.

A further object of the present invention is a commercial or industrial vehicle comprising said vehicle cab.

The claims describe preferred embodiments of the invention and form an integral part of the present description.

### Brief description of the figures

Further purposes and advantages of the present invention will become clear from the following detailed description of a preferred embodiment (and of alternative embodiments) thereof and from the accompanying drawings which are merely illustrative and not limiting, in which:
figure 1 is a schematic view of a longitudinal cross-section of a vehicle cab with a respective supporting system for a steering column according to the present invention in a normal condition of use of the vehicle, while
figure 2 is a schematic view of the same supporting system shown in figure 1 when the vehicle is subject to a frontal impact. In the figures the same reference numerals and letters indicate the same parts or components.

Within the scope of the present description, the term "second" component does not imply the presence of a "first" component. Such terms are simply used for the sake of clarity and should not be considered as limiting the scope of the invention.

### Detailed description of embodiments of the invention

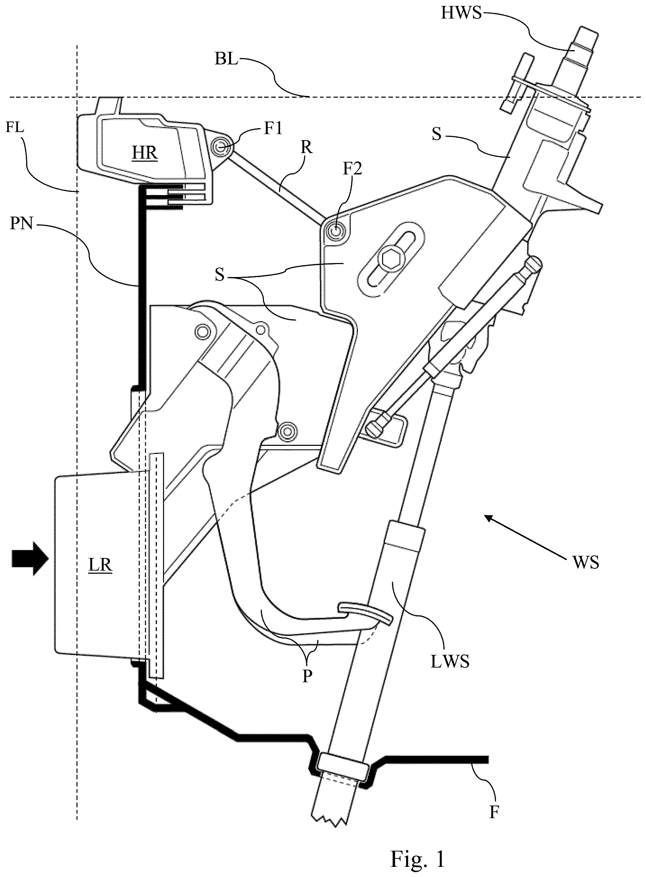

According to a preferred embodiment of the present invention, illustrated in figure 1, at the bottom is the floor F of the vehicle cab, through which the steering column WS is inserted.

The steering column WS is substantially formed of two portions, a lower portion LWS that passes through the floor F and an upper portion HWS supported by the support S.

The supporting element S, as shown in figure 1, is a complex element which may be formed as a single piece or comprise several parts joined together to rotatably support the upper part of the steering column HWS and, at the bottom, the pedal device P comprising two or more pedals. The frontal wall of the vehicle cab is schematically indicated by means of a dashed line FL, while the waistrail of the cab is indicated by another dashed line BL.

The vehicle cab is delimited at the bottom by the floor F and at the front - from the bottom to the top - by a lower element LR, adjacent to and contiguous with the floor F, a panel PN and an upper element HR.

The lower element LR projects forward (i.e. to the left in the drawing) with respect to the upper element, preferably beyond the frontal wall FL. It may be made of a poor material, such as plastic, and be box-shaped with a substantially rectangular or trapezoidal cross-section, and has a low resistance to frontal impacts of the vehicle.

The floor F and the upper element HR instead have a high resistance to frontal impacts with respect to the lower element LR.

The lower part of the steering column support S is integral or in any case in contact with the lower element LR and the upper part hangs from the upper element HR by means of a traction element R.

As can be seen in figure 1, the steering column WS is arranged obliquely with respect to the longitudinal extension of the vehicle cab, and slopes back towards the driver (not illustrated). The support S follows, in part, the shape of the steering column to rotatably support it and is substantially hanging from the upper element HR, which at least partially overhangs the support S. According to a preferred embodiment of the invention, the support hangs from the upper element HR by means of an arm R with a first end F1 pivoted to the upper element HR and a second end F2, opposite the first end, pivoted to the support S.

Said arm defines said traction element for the reasons explained later on in this document.

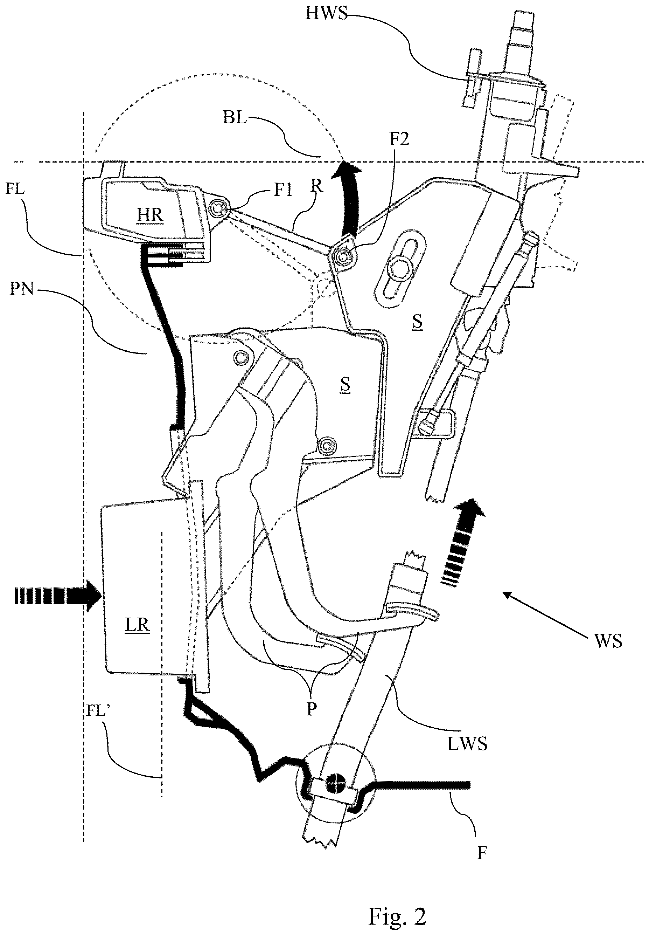

Figure 2 illustrates the consequences of a frontal impact. Since the lower element LR projects forward with respect to the cab, it is the first component to come into contact with an obstacle (not illustrated) and is deformed, pushing the support S back.

This, in turn, since it is supported at the top by an element HR which is much more rigid than the lower element LR, causes the steering column WS to rotate about a pivot point in F1, that is to say on the upper element HR, which moves the steering wheel away from the driver's chest.

The figure also shows the deformation of the frontal part of the cab indicated by the symbol FL', which moves back together with the lower element LR. The lower part of the steering column is shown to be broken/interrupted. This is merely a graphic representation which does not take into account the deformation or deformability of the column. In other words, the steering column does not necessarily break following the frontal impact. It might just be deformed.

A dashed circle indicates the rotation of the point F2 of the support S about the pivot point F1.

From the comparison between figures 1 and 2 it is clear that, following the impact, the upper part HWS of the steering column WS is further to the left, that is to say, further forward in relation to the original portion shown in figure 1.

According to a preferred embodiment of the invention, the arm R is made of a material that is fragile to compressive forces and preferably of a steel rope, or a chain or preferably, a multi-articulated arm.

That is why said arm R is preferably defined as a "traction element", in that it is able to transfer traction forces only, and not compressive forces.

In this way, in the event of a particularly violent impact, or an impact with a particularly high obstacle, in which the upper element HR is also deformed, a possible rearward deformation of said upper element HR would not transfer a respective rearward displacement of the upper part HWS of the steering column WS. In other words, since the upper element HR is connected to the upper part of the support S by means of a multi-articulated element it cannot transfer an action to the driver's chest.

The steering wheel would, at most, collapse backwards, but without transferring dangerous actions to the driver as a consequence of the deformation of the upper element HR. Figures 1 and 2 both show a longitudinal cross-section of the vehicle cab, and it is therefore clear that both the lower element LR and the upper element HR extend longitudinally and are inserted in the frontal part FL of the vehicle cab, and are thus substantially reciprocally parallel and horizontal.

The terms "deformable" and "rigid" used, respectively, to describe the lower element LR and upper element HR, are to be considered in relation to one another, in that the upper element HR is much more rigid than the lower element LR, which is much more deformable.

Other embodiments of the non-limiting example of the invention described herein may be implemented without departing from the scope of protection of the present invention.

From the above description it will be possible for the person skilled in the art to implement the object of the invention without the need for any additional construction details. That described in the description of the state of the art serves merely to ensure a better understanding of the invention and does not constitute a declaration concerning the existence of that described.

None of the features of the alternative embodiments are essential, with the exception of that set forth in the independent claims. Therefore, the individual features of each preferred embodiment or drawing may be combined with the other embodiments that are described.

## Claims

1. Vehicle cab of an industrial or commercial vehicle comprising a system for supporting a steering column (WS), the supporting system comprising
- a lower elongated element (LR), inserted in a frontal wall (FL) of the vehicle cab, in a position adjacent to and contiguous with a floor (F) of the vehicle cab,
- an upper elongated element (HR), inserted in the frontal wall (FL) of the vehicle cab, above the lower elongated element (LR),
- a support (S) suitable to rotatably support said steering column (WS),
wherein said lower elongated element (LR) projects forward with respect to said upper elongated element and wherein said support (S) has a lower part at least in contact with said lower elongated element (LR), and an upper part hanging from said upper elongated element (HR) by means of a traction element (R), so that in case of frontal impact, the support rotates by pivoting about said upper elongated element (HR).

2. Supporting system according to claim 1, wherein said traction element has a first end (F1) connected/pivoted to said upper elongated element (HR) and a second end (F2) to said upper part of the support (S).

3. System according to claim 2, wherein said traction element (R) comprises an arm fragile to compressive forces or a steel rope or a multi-articulated arm.

4. System according to one of claims 1 to 3, wherein said lower elongated element (LR) is much less rigid than said upper elongated element (HR).

5. Industrial or commercial vehicle comprising a vehicle cab according to any one of claims 1 to 4.

## Patentansprüche

1. Fahrzeugkabine eines Industrie- oder Nutzfahrzeugs, umfassend ein System zum Tragen einer Lenksäule (WS), welches Tragesystem umfasst
- ein unteres längliches Element (LR), eingefügt in eine vordere Wand (FL) der Fahrzeugkabine, in einer Position neben und angrenzend an einen Boden (F) der Fahrzeugkabine,
- ein oberes längliches Element (HR), eingefügt in die vordere Wand (FL) der Fahrzeugkabine, oberhalb des unteren länglichen Elements (LR),
- ein Lager (S), geeignet um die Lenksäule (WS) drehbar zu lagern,
wobei das untere längliche Element (LR) in Bezug auf das obere längliche Element (HR) nach vorn vorspringt und wobei das Lager (S) einen unteren Teil hat, mindestens in Kontakt mit dem unteren länglichen Element (LR), und einen oberen Teil, welcher durch ein Zugelement (R) von dem oberen länglichen Element (HR) hängt, sodass, im Fall eines Frontalaufpralls, sich das Lager dreht, indem es um das obere längliche Element (HR) schwenkt.

2. Tragesystem nach Anspruch 1, wobei das Zugelement (R) ein erstes Ende (F1) hat, verbunden/drehbar gelagert mit dem bzw. an das obere längliche Element (HR), und ein zweites Ende (F2) zum oberen Teil des Lagers (S).

3. System nach Anspruch 2, wobei das Zugelement (R) einen gegenüber Druckkräften nachgiebigen Arm oder ein Stahlseil oder einen mehrgelenkigen Arm umfasst.

4. System nach einem der Ansprüche 1 bis 3, wobei das untere längliche Element (LR) viel weniger steif ist als das obere längliche Element (HR).

5. Industrie- oder Nutzfahrzeug, umfassend eine Fahrzeugkabine nach einem der vorstehenden Ansprüche 1 bis 4.

## Revendications

1. Cabine de véhicule d'un véhicule industriel ou commercial comprenant un système pour supporter une colonne de direction (WS), le système de support comprenant :
un élément allongé inférieur (LR), inséré dans une paroi avant (FL) de la cabine de véhicule, dans une position adjacente à et contiguë avec un plancher (F) de la cabine de véhicule,
un élément allongé supérieur (HR) inséré dans la paroi avant (FL) de la cabine de véhicule, au-dessus de l'élément allongé inférieur (LR),
un support (S) approprié pour supporter, en rotation, ladite colonne de direction (WS),
dans laquelle ledit élément allongé inférieur (LR) fait saillie vers l'avant par rapport audit élément allongé supérieur et dans laquelle ledit support (S) a une partie inférieure au moins en contact avec ledit élément allongé inférieur (LR), et une partie supérieure suspendue audit élément allongé supérieur (HR) au moyen d'un élément de traction (R), de sorte qu'en cas de choc frontal, le support tourne par pivotement autour dudit élément allongé supérieur (HR).

2. Système de support selon la revendication 1, dans lequel ledit élément de traction a une première extrémité (F1) raccordée / pivotée par rapport audit élément allongé supérieur (HR) et une seconde extrémité (F2) par rapport à ladite partie supérieure du support (S).

3. Système selon la revendication 2, dans lequel ledit élément de traction (R) comprend un bras fragile aux forces de compression ou un câble en acier ou un bras à plusieurs articulations.

4. Système selon l'une des revendications 1 à 3, dans lequel ledit élément allongé inférieur (LR) est nettement moins rigide que ledit élément allongé supérieur (HR).

5. Véhicule industriel ou commercial comprenant une cabine de véhicule selon l'une quelconque des revendications 1 à 4.
